Europäisches Patentamt

European Patent Office

Office européen des brevets

(11) Numéro de publication: **0 007 848**
**A1**

(12) ## DEMANDE DE BREVET EUROPEEN

(21) Numéro de dépôt: **79400487.9**

(22) Date de dépôt: **10.07.79**

(51) Int. Cl.³: **G 06 F 13/00**

---

(30) Priorité: **21.07.78 FR 7821749**

(43) Date de publication de la demande:
**06.02.80 Bulletin 80/3**

(84) Etats Contractants Désignés:
**BE DE GB IT SE**

(71) Demandeur: **SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay(FR)**

(72) Inventeur: **Pham Duc, Thuy**
**25 bis avenue du Bois de Verrières**
**F-92290 Chatenay Malabry(FR)**

(74) Mandataire: **Kavos, Stéphane**
**B.P. 59 Aérodrome de Villacoublay**
**F-78140 Velizy Villacoublay(FR)**

---

(54) **Système de communication par mémoire commune dans un calculateur comprenant plusieurs processeurs.**

(57) L'invention concerne un système de communication par mémoire commune comprenant au moins deux processeurs $P_1$, $P_2$ et deux mémoires $RAM_1$ et $RAM_2$. La $RAM_1$ étant la mémoire de travail de $P_1$ et ne pouvant être lue seulement par $P_2$, et la $RAM_2$ étant la mémoire de travail de $P_2$ et ne pouvant être lue seulement par $P_1$.

L'accès du processeur $P_1$ pour lecture/écriture dans la $RAM_1$ et l'accès du processeur $P_2$ pour lecture seulement dans la $RAM_1$ s'effectue par l'intermédiaire d'un premier arbitre (13) tandis que l'accès du processeur $P_2$ pour lecture et écriture dans la $RAM_2$ et l'accès du processeur $P_1$ pour lecture seulement dans la $RAM_2$ s'effectue au moyen d'un deuxième arbitre (20).

./...

EP 0 007 848 A1

Croydon Printing Company Ltd.

D = DONNEES     L = LECTURE     L/E = LECTURE OU ECRITURE
A = ADRESSES     E = ECRITURE

-1-

# SYSTEME DE COMMUNICATION PAR MEMOIRE COMMUNE DANS UN CALCU-LATEUR COMPRENANT PLUSIEURS PROCESSEURS.

L'invention concerne un système de communication par mémoire commune dans un calculateur comprenant plusieurs processeurs.

D'une manière générale, les mécanismes classiques de communication par mémoire commune utilisent à cet effet :

a) une instruction Test and Set (TAS) ininterruptible au niveau de chaque unité centrale. Cette instruction est utilisée par un processeur pour mettre une valeur dans le Sémaphore (FLAG) permettant d'interdire les autres processeurs d'accéder à la ressource commune (mémoire commune) ;

b) un signal matériel généralement appelé BUS LOCK issu de l'unité centrale pendant l'instruction TAS interdisant les autres unités centrales d'accéder au bus de la mémoire commune ;

c) des arbitres permettant de résoudre le conflit d'accès s'il existe des demandes simultanées provenant des unités centrales ;

d) l'utilisation des sémaphores (logiciel) et des primitives P et V de Dijkstra pour :
- la gestion des flag sémaphores,

-2-

- l'utilisation de la mémoire commune comme une ressource critique.

Tous ces inconvénients conduisent à un système complexe tant
au niveau matériel que logiciel.

L'invention a pour but l'élaboration d'un système de communication dans lequel le mécanisme d'échange est simplifié
au maximum. Elle s'applique avantageusement, mais non exclusivement, à la résolution de problèmes, tels que ceux qui se
rencontrent dans l'aéronautique, qui présentent les caractéristiques suivantes :

1.- Les calculs sont effectués en temps réel, les données étant produites et utilisées pendant des cycles
périodiques (on reproduit tous les calculs séquentiellement).

2.- Les cycles de calcul des deux processeurs sont
asynchrones (horloges non synchrones).

3.- Les données produites et utilisées par les processeurs sont des grandeurs physiques à variation faible
dans le temps.

4.- Les données produites par un processeur et utilisées par l'autre sont des mots indépendants. Il n'y a
pas de transfert de tableau.

D'une façon plus précise, le système de communication selon
l'invention est conçu pour au moins deux processeurs $P_1$, $P_2$
avec deux blocs de mémoire vive (RAM) ayant les propriétés
suivantes :

- $RAM_1$ est la mémoire de travail du processeur $P_1$ et ne
peut être lue seulement par le processeur $P_2$ ;

-3-

- $RAM_2$ est la mémoire de travail du processeur $P_2$ et ne peut être lue seulement par le processeur $P_1$.

Selon une caractéristique de l'invention, dans un tel système de communication, l'accès du processeur $P_1$ pour lecture et écriture dans la $RAM_1$ et pour lecture seulement dans la $RAM_2$ s'effectue par l'intermédiaire d'un premier arbitre tandis que l'accès du processeur $P_2$ pour lecture et écriture dans la $RAM_2$ et pour lecture seulement dans la $RAM_1$ s'effectue au moyen d'un deuxième arbitre, le fonctionnement de ces deux arbitres étant tel que :

ARTICLE 1 : si aucune opération n'est en cours et si aucun accès n'est demandé, aucun accès n'est accordé ;

ARTICLE 2 : si aucune opération n'est en cours, et si une seule demande d'accès arrive, l'accès n'est accordé immédiatement au demandeur ;

ARTICLE 3 : si une opération est en cours, et si une autre demande d'accès intervient, cette demande est mise en attente mais devient prioritaire et sera satisfaite dès que l'opération en cours sera terminée ;

ARTICLE 4 : dans le cas limite où les deux demandes sont présentées simultanément (au temps de réaction des portes près) la priorité sera accordée au processeur qui n'était pas demandeur à l'accès précédent.

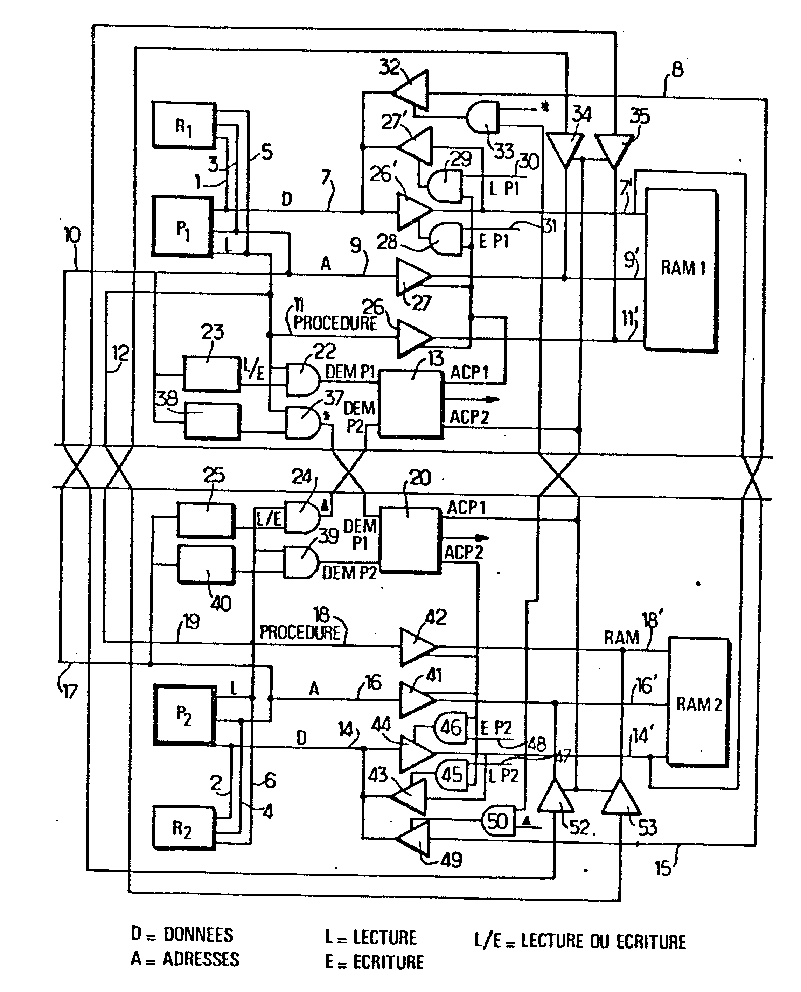

Un mode de réalisation de l'invention sera décrit ci-après, à titre d'exemple non limitatif, avec référence au dessin annexé dans lequel :

La figure unique est le schéma de principe d'un système de commande pour deux processeurs et deux mémoires vives RAM.

Avec référence à la figure unique, le système de communication s'applique à un calculateur comprenant deux processeurs $P_1$ et $P_2$ auxquels sont respectivement associées une mémoire locale REPROM$_1$, REPROM$_2$ et deux mémoires vives de travail RAM$_1$, RAM$_2$.

La liaison des processeurs $P_1$ et $P_2$ avec leurs mémoires locales respectives REPROM$_1$ et REPROM$_2$, s'effectue au moyen d'un bus des données 1, 2 d'un bus des adresses 3, 4 et d'un bus de procédure 5, 6.

Le processeur $P_1$ est en outre relié à sa mémoire de travail RAM$_1$ et à la mémoire de travail RAM$_2$ du processeur $P_2$ au moyen d'un bus de données 7, 7' et 8, d'un bus des adresses 9, 9' et 10 et d'un bus de procédure 11, 11' et 12, et ce au moyen d'un système de commutation piloté par un arbitre 13.

D'une façon analogue, le processeur $P_2$ est relié à sa mémoire de travail RAM$_2$ et à la mémoire de travail RAM$_1$ du processeur $P_1$ au moyen d'un bus de données 14, 14' et 15, un bus des adresses 16, 16' et 17 et un bus de procédure 18, 18' et 19 et ce au moyen d'un système de commutation piloté par un arbitre 20.

Les arbitres 13 et 20 comprennent chacun deux entrées DEMP$_1$ et DEMP$_2$ de demande d'accès aux mémoires RAM$_1$ et RAM$_2$ ainsi que deux sorties ACP$_1$ et ACP$_2$ commandant l'accès aux mémoires RAM$_1$ et RAM$_2$.

L'arbitre 13 est relié par une de ses entrées à un circuit permettant de générer l'instruction DEMP$_1$ de demande d'accès processeur $P_1$ à la RAM$_1$. Ce circuit comprend une porte ET 22 qui est connectée par l'une de ses entrées au bus de procédure 11 (lecture ou écriture) du processeur $P_1$ en amont du dispositif de commutation, et par l'autre entrée à un décodeur 23 relié au bus des adresses 10.

La deuxième entrée de l'arbitre 13 est reliée à un circuit permettant de générer l'instruction $DEMP_2$ de demande d'accès du processeur $P_2$ à la $RAM_1$. Ce circuit comprend une porte ET 24 qui est connectée par l'une de ses entrées au bus de procédure 18 (lecture) du processeur $P_2$, et par l'autre entrée à un décodeur 25 relié au bus des adresses 17.

L'arbitre 13 est relié par sa sortie délivrant le signal $ACP_1$ d'accès à la $RAM_1$, d'une part, à deux dispositifs de commutation 26, 27 commandant les bus des adresses 9 et des procédures 11 reliant le processeur $P_1$ à la $RAM_1$, et d'autre part, à un adaptateur bidirectionnel (Driver) destiné à connecter au bus des données 7' relié à la $RAM_1$ soit le bus des données 7 associé au processeur $P_1$, pour lecture ou écriture sur la $RAM_1$, soit le but des données 8 relié au processeur $P_2$, pour lecture seulement.

Cet adaptateur comprend tout d'abord deux dispositifs de commutation 26', 27' montés en parallèle sur le bus des données 7, 7' du processeur $P_1$ et qui sont respectivement pilotés par deux portes ET 28, 29. La porte ET 29 est reliée par l'une de ses entrées à la sortie $ACP_1$ de l'arbitre 13 et par l'autre entrée au signal de lecture de la $RAM_1$ par le processeur $P_1$ (borne 30). La porte ET 28 est quant à elle reliée par l'autre entrée à un signal d'écriture sur la $RAM_1$ par le processeur $P_1$ (borne 31).

L'adaptateur comprend également un dispositif de commutation 32 commandant l'accès du bus des données 8 du processeur $P_2$ au bus des données 7 du processeur $P_1$, en amont de l'adaptateur. Ce dispositif de commutation est commandé par un circuit comprenant une porte ET 33 qui est reliée par l'une de ses entrées à la sortie de la porte ET 37 dont il sera question dans la suite de la description, et par son autre entrée, à la sortie $ACP_1$ de l'arbitre 20.

L'adaptateur comprend en outre deux dispositifs de commutation 34 et 35 commandant respectivement l'accès du bus des adresses 19 et du bus de procédure 17 du processeur $P_2$ aux bus des adresses 9' et des procédures 11' associées à la $RAM_1$.

Ces deux dispositifs de commutation sont commandés par la sortie $ACP_2$ de l'arbitre 13.

D'une façon analogue, l'arbitre 20 est relié par une de ses entrées à un circuit permettant de générer l'instruction $DEMP_1$ de demande d'accès du processeur $P_1$ à la $RAM_2$. Ce circuit comprend une porte ET 37 qui est connectée par l'une de ses entrées au bus de procédure 11 (lecture) du processeur $P_1$ en amont du dispositif de commutation, et par l'autre entrée un décodeur 38 relié au bus des adresses 10.

La deuxième entrée de l'arbitre 20 est reliée à un circuit permettant de générer l'instruction $DEMP_2$ de demande d'accès du processeur $P_2$ à la $RAM_2$. Ce circuit comprend une porte ET 39 qui est connectée par l'une de ses entrées au bus de procédure 18 (lecture-écriture) du processeur $P_2$, et par l'autre entrée à un décodeur 40 relié au bus des adresses 17.

L'arbitre 20 est relié par sa sortie délivrant le signal $ACP_2$ d'accès à la $RAM_2$, d'une part, à deux dispositifs de commutation 41, 42 commandant les bus des adresses 16 et des procédures 18 reliant le processeur $P_2$ à la $RAM_2$, et d'autre part, à un adaptateur (Driver) destiné à connecter au bus des données 14 relié à la $RAM_2$ soit le bus des données 14' associé au processeur $P_2$, pour lecture ou écriture sur la $RAM_2$, soit le bus des données 8 associé au processeur $P_1$, pour lecture seulement.

Cet adaptateur comprend tout d'abord deux dispositifs de commutation 43, 44 montés en parallèles sur le bus des données 14 du processeur $P_2$ et qui sont respectivement pilotées par deux portes ET 45, 46. La porte ET 45 est reliée par l'une de ses entrées à un signal de lecture de la RAM$_2$ par le processeur $P_2$ (borne 47). La porte ET 46 est quant à elle reliée par l'une de ses entrées à la sortie ACP$_2$ de l'arbitre 20 et par l'autre entrée à un signal d'écriture de la RAM$_2$ par le processeur $P_2$ (borne 48).

L'adaptateur comprend également un dispositif de commutation 49 commandant l'accès du bus de données 7' du processeur $P_1$ au bus des données 14 du processeur $P_2$, en amont de l'adaptateur. Ce dispositif de commutation 49 est commandé par un circuit comprenant une porte ET 50 qui est reliée par l'une de ses entrées à la sortie de la porte ET 24, et par son autre entrée, à la sortie ACP$_2$ de l'arbitre 13.

L'adaptateur comprend en outre deux dispositifs de commutation 52, 53 commandant respectivement l'accès du bus des adresses 10 et du bus de procédure 12 du processeur $P_1$ aux bus des adresses 16' et des procédures 18' associées à la RAM$_2$.

Ces deux dispositifs de commutation sont commandés par la sortie ACP$_1$ de l'arbitre 20.

Les arbitres 13 et 20 utilisés dans le système précédemment décrit peuvent être réalisés au moyen d'un automatisme séquentiel sans aléa. Un tel automatisme peut être réalisé de façon classique à partir des articles 1 à 4 précédemment mentionnés, en utilisant à cet effet la méthode des tables de Karnaugh.

Selon un mode de réalisation de l'invention le circuit logique de chacun des arbitres peut être réalisé à partir des relations suivantes :

1) $y_1 = DEMP_1 \cdot \overline{DEMP_2} + DEMP_1 \cdot y_1 + \overline{DEMP_2} \cdot y_2 + DEMP_2 \cdot y_1 \cdot \overline{y_2}$

2) $y_2 = \overline{DEMP_1} \cdot DEMP_2 + \overline{y_1} \, y_2 + y_2 \, \overline{DEMP_1} + \overline{y_1} \, DEMP_2$

3) $ACP_1 = y_1 \, \overline{y_2}$

4) $ACP_2 = \overline{y_1} \, y_2$

5) $ETAT = \overline{y_2}$

dans lesquelles :

- $y_1$ et $y_2$ sont deux variables secondaires,

- $DEMP_1$, $DEMP_2$ les demandes d'accès faites par les processeurs indépendamment l'un de l'autre,

- $ACP_1$, $ACP_2$ les accès à la mémoire accordés par l'arbitre à l'un ou l'autre des processeurs compte tenu de la situation,

- ETAT variable indiquant le dernier processeur à avoir été satisfait.

Revendications

1.- Système de communication par mémoire commune dans un calculateur comprenant au moins deux processeurs $P_1$, $P_2$, avec deux blocs de mémoire vive ($RAM_1$ et $RAM_2$) ayant la propriété suivante :

- la $RAM_1$ est la mémoire de travail du processeur $P_1$ et ne peut être lue seulement par le processeur $P_2$,

- la $RAM_2$ est la mémoire de travail du processeur $P_2$ et ne peut être lue seulement par le processeur $P_1$,

caractérisé en ce que l'accès du processeur $P_1$ pour lecture écriture dans la $RAM_1$ et pour lecture seulement dans la $RAM_2$ s'effectue par l'intermédiaire d'un premier arbitre tandis que l'accès du processeur $P_2$ pour lecture et écriture dans la $RAM_2$ et pour lecture seulement dans la $RAM_1$ s'effectue au moyen d'un deuxième arbitre.

2.- Système de communication selon la revendication 1, dans lequel chacun des deux arbitres consiste en un circuit de commutation concu de façon telle que, si aucune opération n'est en cours et si aucun accès n'est demandé, aucun accès n'est accordé ; si aucune opération n'est en cours et si une seule demande d'accès arrive, l'accès est accordé immédiatement au demandeur, si une opération est en cours et si une autre demande d'accès intervient, cette demande est mise en attente mais devient prioritaire et sera satisfaite dès que l'opération en cours sera terminée, et, dans le cas limite où les deux demandes sont présentées simultanément (au temps de réaction des portes près) la priorité sera accordée au processeur qui n'était pas demandeur à l'accès précédent.

3.- Système selon la revendication 2, caractérisé en ce que le circuit de commutation précité consiste en un automatisme séquentiel sans aléa.

4.- Système selon la revendication 3, caractérisé en ce que, si l'on appelle $P_1$, $P_2$ les deux processeurs, $DEMP_1$, $DEMP_2$ les demandes d'accès faites par les processeurs indépendamment l'un de l'autre, $ACP_1$, $ACP_2$ les accès à la mémoire accordés par l'arbitre à l'un ou l'autre des processeurs compte tenu de la situation, ETAT une variable indiquant le dernier processeur à avoir été satisfait, et $Y_1$ et $Y_2$ deux variables secondaires, l'élaboration du circuit de chacun des arbitres s'obtient au moyen des relations suivantes :

1) $Y_1 = DEMP_1 \cdot \overline{DEMP_2} + DEMP_1 \cdot y_1 + \overline{DEMP_2} \cdot y_2 + DEMP_2 \cdot y_1 \cdot \overline{y_2}$

2) $Y_2 = \overline{DEMP_1} \cdot DEMP_2 + \overline{y_1} \; y_2 \quad \overline{DEMP_1} + \overline{y_1} \; DEMP_2$

3) $ACP_1 = y_1 \; \overline{y_2}$

4) $ACP_2 = \overline{y_1} \; y_2$

5) $ETAT = \overline{y_2}$

D = DONNEES      L = LECTURE      L/E = LECTURE OU ECRITURE

A = ADRESSES      E = ECRITURE

Office européen
des brevets

**RAPPORT DE RECHERCHE EUROPEENNE**

Numéro de la demande

**EP 79 40 0487**

| **DOCUMENTS CONSIDERES COMME PERTINENTS** | | | **CLASSEMENT DE LA DEMANDE (Int. Cl. 3)** |
|---|---|---|---|
| Catégorie | Citation du document avec indication, en cas de besoin, des parties pertinentes | Revendica-tion concernée | |
| | Rapport "CLEARINGHOUSE", US Department of Commerce, National Bureau of Standards, no AD 709 599, juillet 1970 IRWIN: "Multiprocessor Computer Systems"  * Page 61, dernier alinéa * | 1 | **G 06 F 13/00** |
| | IBM TECHNICAL DISCLOSURE BULLETIN, volume 20, no. 11B, avril 1978, New York (US) BANTZ: "Computer Interlock Mechanism" pages 5068-5070.  * Page 5068, dernier alinéa * | 1 | **DOMAINES TECHNIQUES RECHERCHES (Int. Cl. 3)** |
| | US - A - 3 771 137 (IBM)  * De colonne 8, ligne 28 - colonne 10, ligne 8, et figures 1-6 * | 1 | **G 06 F 13/00** |
| | IEEE TRANSACTIONS ON COMPUTERS, volume C-20, no. 12, décembre 1971, pages 1583-1586. New York (US) DANIEL et IRWIN: "Dynamic Resolution of Memory Access Conflicts"  * De page 1583, colonne de droite, dernier alinéa - page 1586, colonne de gauche, premier alinéa * | 2-4 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-10-1979 | WEBER ROLAND |

OEB Form 1503.1  06.78